# EUROPEAN PATENT SPECIFICATION

(11) **EP 1 072 698 B1**
(45) Date of publication and mention of the grant of the patent: **29.03.2006**
(21) Application number: 00202596.3
(22) Date of filing: 19.07.2000
(51) Int. Cl.: D01F 6/00, H01B 7/28, C08K 5/13, C08K 5/3475

(54) **Cables and method for manufacturing the same**
Kabel und Herstellungsmethode derselben
Cables ainsi que procédé de leur production

(30) Priority: 21.07.1999 NL 1012662
(43) Date of publication of application: 31.01.2001
(73) Proprietor: Vepetex B.V., 5753 AX Deurne (NL)
(72) Inventor: Meijer, Johannes Adrianus Gerardus Maria, 5707 GT Helmond (NL); van Kimmenade, Ludovicus Bernardus Wilhelmus Maria, 5706 LT Helmond (NL)
(74) Representative: Vernout, Robert

(56) References cited:
- EP-A- 0 391 076
- WO-A-99/34041
- GB-A- 2 162 750
- CHEMICAL ABSTRACTS, vol. 1998, Columbus, Ohio, US; abstract no. 210714, NAKANO ET AL.: "CORROSION INHIBITOR ELECTRIC CABLE" XP002132901 -& JP 10 088375 A (DAIDEN KK) 7 April 1998 (1998-04-07)
- PATENT ABSTRACTS OF JAPAN vol. 1997, no. 04, 30 April 1997 (1997-04-30) & JP 08 325844 A (UNITIKA LTD), 10 December 1996 (1996-12-10)

## Description

The invention relates to a cable for telecommunication or current transmission comprising a yarn and/or a membrane comprising fibres, which is disposed between the optically or electrically conductive wires that are present in the cable.

Cables, such as communication cables and power cables, for example, can be made from various materials, among which polymers and metals, depending on the purpose for which the cable is used (see e.g. JP-A-10 088 375). Said cables are often required to have a long life, more than 40 years in some cases. It is very important, therefore, that the materials be selected so that they meet the design criteria not only initially, but that they retain their characteristics throughout their desired life span. A special type of cable is one which incorporates swellable superabsorbent yarns, which function to protect the cable against penetrating moisture, such as sea water or ground water. The yarns surrounding the core absorb penetrating moisture, thereby swelling to such a degree that they stop possible leaks and prevent any further penetration of moisture. The yarns may also be disposed between the individual yarns of the core of the cable so as to absorb undesirable moisture and/or fill the interstices. Superabsorbent yarns are not only used in cables for that matter, they are also employed for other purposes.

Many characteristics of polymers, and in particular the swelling capacity of superabsorbent polymer yarns, deteriorate in the course of time, and eventually they will no longer be suitable for the use for which they were intended. The mechanism and speed of this process depends to a large degree on the environmental conditions of the polymer and on the presence of other materials. The main factors that play a role in affecting the quality of the polymers being used and the swelling capacity of the yarns are oxidation of the polymer due to the presence of oxygen, as well as the effect of metal ions, such as copper ions, on the polymer. Frequently the metal core of the cable is in direct contact with the swellable polymer yarns. Furthermore the metals are liable to corrosion caused by the presence of moisture and oxygen.

The object of the invention is to alleviate the above effects, and thus manufacture a cable or other product comprising swellable fibres that exhibits improved characteristics in comparison with existing products.

In order to accomplish that objective, according to the invention said fibre is the carrier of an additive capable of being released to the environment of the fibres, said additive being an antioxidant and/or a metal ion deactivator. Said additives are capable of binding oxygen radicals and/or metal ions, for example, as a result of which it is possible to diminish the action of oxygen and/or metal ions on the polymer and on the fibres, as well as the corrosion of metals, and consequently they also have a preserving effect. The additives preferably comprise an antioxidant, which is capable of binding the oxygen radicals. Said antioxidant preferably comprises a phenol compound, for example Irganox L135 and/or Irganox L115. Preferably, the additives also comprise a metal ion deactivator, which is capable of binding metal ions, such as copper ions. Said metal ion deactivator preferably comprises a benzotriazole compound, for example methyl-1H-benzotriazole and/or N-alkylated benzotriazole, and/or a tolutriazole compound.In practice the best result was obtained when a combination of an antioxidant and a metal ion deactivator was used.

Preferably, the fibre is substantially a polymer fibre. In one preferred embodiment said fibre is a swellable fibre, preferably a polyacrylate fibre, which is capable of binding a large amount of water, for manufacturing superabsorbent yarns or membranes. In another preferred embodiment said fibre is a supporting fibre, preferably a polyester or polypropylene fibre, which is used for strengthening the superabsorbent yarns or membranes.

In one preferred embodiment said additives are substantially homogeneously distributed in the fibre, with the additives being added to the polymer solution, also called "polymer paste", during manufacture, before said solution is processed into a fibre. In another preferred embodiment the additives form a coating which is applied to the fibre after formation of the fibre but prior to the crosslinking process.

The invention furthermore relates to a method for manufacturing a cable for telecommunication or current transmission, wherein a yarn and/or a membrane comprising fibres which are the carriers of an additive capable of being released to the environment of the fibres, said additive being an antioxidant and/or a metal ion deactivator, is incorporated in the cable.

The invention will be explained in more detail hereafter with reference to the figures, wherein:
Figure 1 is a cut-away view of a power cable; and
Figure 2 is a cut-away view of a telecommunication cable.

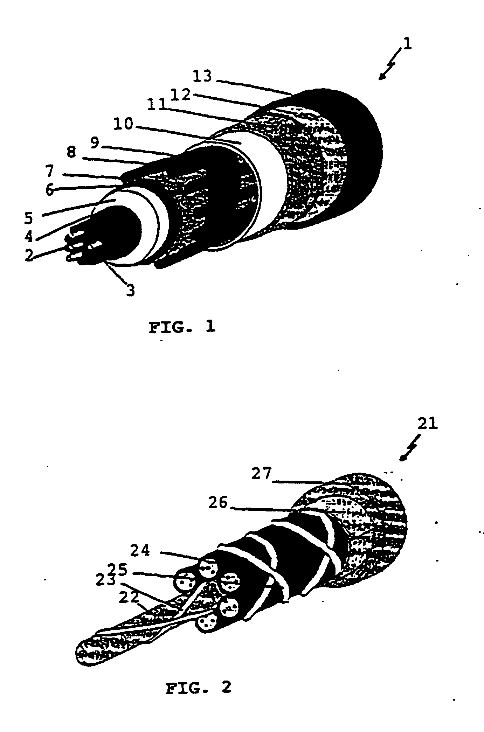

Figure 1 shows a power cable 1, which consists of a core comprising conducting wires 2, which are for example made of copper, between which superabsorbent yarns 3 are disposed, which yarns contain antioxidants and metal ion deactivators. The core is surrounded by a thin, semiconductive polyethylene conducting gauze 4, which is enveloped in a relatively thick polyethylene insulation layer 5, which is surrounded by a thin, semiconductive polyethylene insulation gauze 6. Surrounding said insulation gauze is a layer of semiconductive tape 7, a number of screening wires 8, a layer of copper band 9 and a layer of a non-conductive tape 10. The covering of cable 1 is made up of a polyethylene or rubber inner sheath 11, a watertight layer of aluminium barrier band 12 and a polyethylene outer sheath 13.

Figure 2 shows an optical telecommunication cable 21 comprising a core 22 which gives cable 21 its strength. Wound around said core are superabsorbent yarns 23, which contain antioxidants. Surrounding core 22 are the optical cables 24, around which superabsorbent yarns 25 containing antioxidants are likewise wound. The covering of cable 21 is made up of a watertight aluminium barrier layer 26 and an outer sheath 27.

A layer of a non-woven, superabsorbent membrane (not shown) may be incorporated in the covering of cables 1, 21, which layer is capable of absorbing penetrating moisture, as a result of which the membrane will swell and a possible leak will be stopped.

The polymer products and the metals, such as copper, aluminium and steel which may be incorporated in the cables 1, 21, are exposed to the action of oxygen and moisture, both of which are frequently present in such cables, in spite of the protective design thereof. Polymers become brittle and start to exhibit cracks, the absorption capacity of the superabsorbent yarns and membranes decreases, whilst metals are worn away and attacked. The action of the antioxidants and metal ion deactivators that have been added to the yarns 3, 23 and 25, and which is capable of being released to the surrounding material by said yarns, is as follows.

### Antioxidants

The main factors in the degradation of polymers are oxygen, moisture, metals and temperature. The temperature in communication and current transmission cables is generally high, so that a thermal oxidation process can occur, which can be represented as follows:
Initiation:

   RH → R· + H·
Propagation:

   R· + O₂ → ROO·

   ROO· + RH → ROOH + R·

   ROOH → RO· + HO·
Termination:

   R· + R → RR

   R· + ROO· → Inert products

   ROO· + ROO· → Inert products

Under the influence of heat or other energy a polymer RH generates a polymer radical R·, which subsequently reacts with oxygen to form a peroxide radical ROO·. Said peroxide radical subsequently reacts with another polymer RH to form hydroperoxide ROOH, whereby a polymer radical R· is released again. The hydroperoxide decomposes into an alkoxi radical RO· and a hydroxyl radical HO·. This chain reaction results in the polymer molecules being damaged and polar molecules being formed.

The chain reaction can be stopped by adding an antioxidant HA, whereby said antioxidant also takes care of the decomposition of the hydroperoxide:
Reaction

   ROO· + HA → ROOH + A·
interruption

   RO· + HA → ROH + A· (stable)

   HO· + HA → H₂O + A· (stable)
Peroxide

   decomposition ROOH + RSR → Inert products

Suitable antioxidants include:
Irganox L135, a phenol compound having a high molecular weight, according to the formula (I): 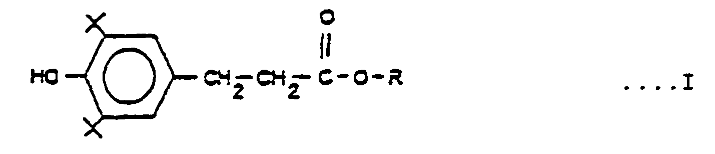 and Irganox L115, which contains a thioether group, according to the formula (II):

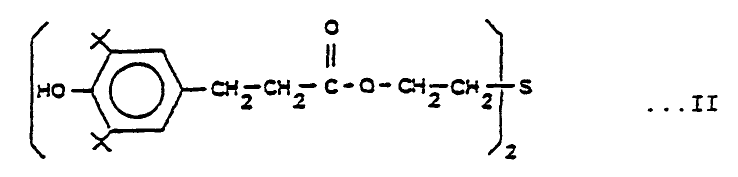

### Metal ion deactivators

Polymer molecules can oxidate faster when they are in contact with a metal, in particular if said metal is copper. This can be represented as follows:
Copper oxidation

   Cu → Cu⁺⁺ + 2e
Polymer reaction

   ROOH + Cu → ROO· + Cu⁺ + H⁺

   ROOH + Cu⁺ → RO· + Cu⁺⁺ + OH⁻

The copper ion that is produced as a result of oxidation of copper reacts directly with hydroperoxide. Polymer radicals are released during said process, and the chain reaction is accelerated to such an extent that an antioxidant alone is no longer capable of counteracting degradation. For that reason a metal ion deactivator L is added, whose action is as follows:
Complexing

   Cu⁺⁺ + nL → [Cu(L)ₙ]⁺⁺ (stable)

The copper ion is trapped by the deactivator L, as a result of which it no longer reacts with other products.

Suitable metal ion deactivators include:
1H-Benzotriazole, according to the formula (III): 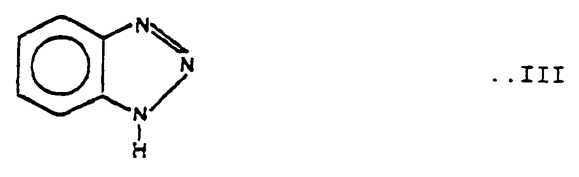 or products derived therefrom, such as alkyl-1H-benzotriazole, according to the formula (IV): 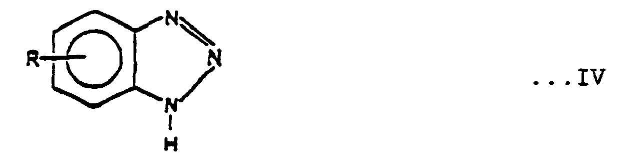 wherein the alkyl group may be methyl, for example, and alkyl-1-methyldialkylamine-benzotriazol, according to the formula (V):

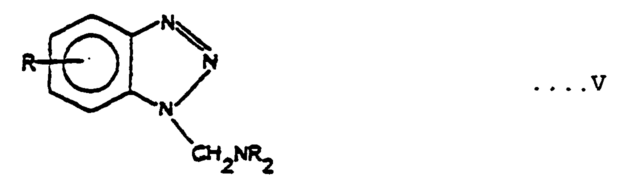

## Claims

1. A cable (21, 1) for telecommunication or current transmission comprising a yarn (3, 23, 25) and/or a membrane comprising fibres, which is disposed between the optically or electrically conductive wires that are present in the cable (21, 1), **characterised in that** said fibre is the carrier of an additive capable of being released to the environment of the fibres, said additive being an antioxidant and/or a metal ion deactivator.

2. A cable according to claim 1, **characterised in that** said fibre is substantially a polymer fibre.

3. A cable according to claim 1 or 2, **characterised in that** said fibre is a swellable fibre, preferably a polyacrylate fibre, which is used for manufacturing superabsorbent yarns (3, 23, 25) or membranes, or that said fibre is a supporting fibre, preferably a polyester or polypropylene fibre, which is used for manufacturing superabsorbent yarns (3, 23, 25) or membranes.

4. A cable according to any one of the preceding claims, **characterised in that** said additive has a preserving effect, and/or that said additive comprises a phenol compound or Irganox L135 and/or Irganox L115, and/or that said additive comprises a benzotriazole compound and/or a tolutriazole compound, preferably comprising alkyl-1H-benzotriazole and/or alkyl-1-methyldialkylamine benzotriazole, and/or that said additive is substantially homogeneously distributed in the fibre, and/or that said additive forms a coating on the fibre.

5. A cable according to any one of the preceding claims, wherein said yarn preferably includes at least 25%, preferably at least 50%, more preferably about 60% swellable fibres, with the balance substantially consisting of non-swellable supporting fibres.

6. A method for manufacturing a cable (1, 21) for telecommunication or current transmission, wherein a yarn (2) and/or a membrane comprising fibres which are the carriers of an additive capable of being released to the environment of the fibres, said additive being an antioxidant and/or a metal ion deactivator, is incorporated in the cable (1, 21).

7. A method according to claim 6, wherein said additive is preferably added to the liquid mass from which the fibre is manufactured, and/or wherein said additive is preferably applied to the fibre in the form of a coating prior to the crosslinking process.

8. A method according to claim 7, wherein fibres which are the carriers of an additive added thereto are spun into a yarn (3, 23, 25) or incorporated in said membrane.

## Patentansprüche

1. Kabel (21, 1) für Telekommunikation oder Stromübertragung, das ein Garn (3, 23, 25) und/oder eine Membran umfaßt, das/die Fasern umfaßt und zwischen den optisch oder elektrisch leitenden Drähten angeordnet ist, die im Kabel (21, 1) vorhanden sind, **dadurch gekennzeichnet, daß** besagte Faser der Träger eines Zusatzstoffes ist, der an die Umgebung der Fasern abgegeben werden kann, wobei besagter Zusatzstoff ein Antioxidationsmittel und/oder ein Metall-Ionen-Deaktivator ist.

2. Kabel nach Anspruch 1, **dadurch gekennzeichnet, daß** besagte Faser im wesentlichen eine Polymerfaser ist.

3. Kabel nach Anspruch 1 oder 2, **dadurch gekennzeichnet, daß** besagte Faser eine quellbare Faser ist, vorzugsweise eine Polyacrylatfaser, die zur Herstellung superabsorbierender Garne (3, 23, 25) oder Membranen verwendet wird, oder daß besagte Faser eine Stützfaser ist, vorzugsweise eine Polyester- oder Polypropylenfaser, die zur Herstellung superabsorbierender Garne (3, 23, 25) oder Membranen verwendet wird.

4. Kabel nach einem der vorangehenden Ansprüche, **dadurch gekennzeichnet, daß** besagter Zusatzstoff eine Schutzwirkung hat und/oder daß besagter Zusatzstoff eine Phenolverbindung oder Irganox L135 und/oder Irganox L115 umfaßt und/oder daß besagter Zusatzstoff eine Benzotriazolverbindung und/oder eine Tolutriazolverbindung umfaßt, die vorzugsweise Alkyl-1H-benzotriazol und/oder Alkyl-1-methyldialkylaminbenzotriazol umfaßt, und/oder daß besagter Zusatzstoff im wesentlichen homogen in der Faser verteilt ist und/oder daß besagter Zusatzstoff einen Überzug auf der Faser bildet.

5. Kabel nach einem der vorangehenden Ansprüche, **dadurch gekennzeichnet, daß** besagtes Garn vorzugsweise wenigstens 25%, bevorzugt wenigstens 50%, bevorzugter etwa 60% quellbare Fasern einschließt, wobei der Rest im wesentlichen aus nichtquellbaren Stützfasern besteht.

6. Verfahren zur Herstellung eines Kabels (1, 21) für Telekommunikation oder Stromübertragung, wobei ein Garn (2) und/oder eine Membran, das/die Fasern umfaßt, die die Träger eines Zusatzstoffes sind, der an die Umgebung der Fasern abgegeben werden kann, wobei besagter Zusatzstoff ein Antioxidationsmittel und/oder ein Metall-Ionen-Deaktivator ist, in das Kabel (1, 21) eingearbeitet wird.

7. Verfahren nach Anspruch 6, **dadurch gekennzeichnet, daß** besagter Zusatzstoff vorzugsweise zur flüssigen Masse zugesetzt wird, aus der die Faser hergestellt wird, und/oder daß besagter Zusatzstoff vorzugsweise auf die Faser in Form eines Überzugs vor dem Vernetzungsprozeß aufgebracht wird.

8. Verfahren nach Anspruch 7, **dadurch gekennzeichnet, daß** Fasern, die die Träger eines Zusatzstoffes sind, der dort hinzugegeben ist, zu einem Garn (3, 23, 25) versponnen oder in besagte Membran eingearbeitet werden.

## Revendications

1. Câble (21, 1) de télécommunications ou de transmission de courant, comprenant un fil (3, 23, 25) et/ou une membrane comprenant des fibres, qui est disposé entre des fils conducteurs optiques ou de l'électricité qui sont présents dans le câble (21, 1), **caractérisé en ce que** la fibre est le support d'un adjuvant qui peut être libéré vers le milieu environnant des fibres, l'adjuvant étant un anti-oxydant et/ou un désactivateur d'ions métalliques.

2. Câble selon la revendication 1, **caractérisé en ce que** la fibre est pratiquement une fibre polymère.

3. Câble selon la revendication 1 ou 2, **caractérisé en ce que** la fibre est une fibre gonflable, de préférence une fibre de polyacrylate, qui est utilisée pour la fabrication de fils (3, 23, 25) ou de membranes super-absorbants ou **en ce que** la fibre est une fibre de support, de préférence une fibre de polyester ou de polypropylène, qui est utilisée pour la fabrication de fils (3, 23, 25) ou de membranes super-absorbants.

4. Câble selon l'une quelconque des revendications précédentes, **caractérisé en ce que** l'adjuvant a un effet de préservation et/ou **en ce que** l'adjuvant contient un composé de phénol ou "Irganox L135" et/ou "Irganox L115", et/ou **en ce que** l'adjuvant contient un composé de benzotriazole et/ou un composé de tolutriazole, de préférence contenant un alkyl-1H-benzotriazole et/ou un alkyl-1-méthyldialkylamine-benzotriazole, et/ou **en ce que** l'adjuvant est distribué de façon pratiquement homogène dans la fibre, et/ou **en ce que** l'adjuvant forme un revêtement sur la fibre.

5. Câble selon l'une quelconque des revendications précédentes, dans lequel le fil contient de préférence au moins 25 %, de préférence au moins 50 %, et plus avantageusement environ 60 % de fibre gonflable, le reste étant constitué pratiquement de fibre de support non gonflable.

6. Procédé de fabrication d'un câble (1, 21) de télécommunications ou de transmission de courant, dans lequel un fil (2) et/ou une membrane contenant des fibres qui sont les supports d'un adjuvant capable d'être libéré dans le milieu environnant des fibres, l'adjuvant étant un anti-oxydant et/ou un désactivateur d'ions métalliques, est incorporé dans le câble (1, 21).

7. Procédé selon la revendication 6, dans lequel l'adjuvant est de préférence ajouté à la masse liquide à partir de laquelle la fibre est fabriquée, et/ou dans lequel l'adjuvant est de préférence appliqué à la fibre sous forme d'un revêtement avant l'opération de réticulation.

8. Procédé selon la revendication 7, dans lequel des fibres qui sont les supports d'un adjuvant qui leur est ajouté sont filées sous forme d'un fil (3, 23, 25) ou incorporées à la membrane.
